# EUROPÄISCHE PATENTSCHRIFT

(11) **EP 1 216 827 B1**
(45) Veröffentlichungstag und Bekanntmachung des Hinweises auf die Patenterteilung: **02.11.2005**
(21) Anmeldenummer: 00811227.8
(22) Anmeldetag: 21.12.2000
(51) Int. Cl.: B32B 31/12, B65D 75/62

(54) **Verfahren zur Herstellung einer Verpackungsfolie**
Method for producing a packaging film
Procédé pour la fabrication d'une feuille d'emballage

(43) Veröffentlichungstag der Anmeldung: 26.06.2002
(73) Patentinhaber: Alcan Technology & Management AG, 8212 Neuhausen am Rheinfall (CH)
(72) Erfinder: Marbler, Claude A., 57370 Phalsbourg (FR); Froemer, Frédéric, 57400 Sarrebourg (FR)
(74) Vertreter: Wiedmer, Edwin

(56) Entgegenhaltungen:
- EP-A- 0 468 619
- EP-A- 0 596 747

## Beschreibung

Die Erfindung betrifft ein Verfahren zur Herstellung einer leicht zu offnenden Beutelverpackung nach dem Oberbegriff von Anspruch 1.

Aus der WO-A-9829312 ist eine mehrschichtige Verpackungsfolie für Beutelverpackungen bekannt. Die Verpackungsfolie besteht aus zwei Kunststoffschichten und einer zwischen diesen angeordneten zentralen Leichtmetallschicht. Die äusseren Kunststoffschichten können aus einer einzigen Schicht bestehen oder auch aus mehreren Schichten oder Filmen als Verbundlaminat aufgebaut sein. Die in der späteren Verpackung gegen das Füllgut gerichtete Kunststoffschicht der Verpackungsfolie ist mit zwei parallel und in Abstand zueinander angeordneten linienförmigen Perforationen versehen. Diese Perforationen werden mittels eines Laserstrahls durch Aufschmelzen der Kunststofffolie bis auf die zentrale Metallschicht erzeugt. Bei einer aus der Verpackungsfolie hergestellten Beutelverpackung mit zwei an einem umlaufenden Rand der Verpackung unter Bildung einer Siegelnaht miteinander verbundenen Verpakkungsfolien wird eine Aufreisskerbe am Beutelrand so gelegt, dass sich beim Aufreissen der Verpackung in der Verpackungsfolie fortschreitende Riss zwischen den beiden Perforationslinien startet und durch diese beim weiteren Aufreissen der Verpackung geführt ist.

Die EP-A-0 540 184 offenbart eine mehrschichtige Verpackungsfolie aus thermoplastischen Kunststoffen mit einem auf einer der Beutelfolienoberflächen aufliegenden reflektierenden Metallstreifen. Mittels eines Laserstrahls werden zwei von beiden Seiten der Verpackungsfolie her gegeneinander zulaufende linienförmige Perforationen erzeugt.

Eine aus der US-A-5 000 321 bekannte Verpackungsfolie besteht aus einer beidseitig mit Kunststoff beschichteten Aluminiumfolie. Zur Führung des Risses durch die Verpackungsfolie beim Aufreissen einer aus der Folie hergestellten Verpackung ist die Verpackungsfolie an der vorgesehenen Aufreisslinie durch beidseitigen linienförmigen Abtrag der Kunststoffschicht mit einem Laserstrahl geschwächt.

Bei den aus dem Stand der Technik bekannten mehrschichtigen Verpakkungsfolien mit linienförmigen Perforationen als Führungshilfe beim Aufreissen einer mit der Verbundfolie hergestellten Verpackung werden die Führungslinien mittels eines Laserstrahls ausschliesslich an der fertiggestellten Verbundfolie erzeugt. Bei der teilweisen Auftrennung einer äusseren Kunststoffschicht zur Erzeugung der Perforationen mit einem Laserstrahl müssen die Parameter, die zur Verdampfung des Kunststoffs führen, peinlich genau eingehalten werden, damit die Perforationen einerseits nicht zu schwach sind, andererseits aber keine vollständige Durchtrennung der Verbundfolie erfolgt. Die Erzeugung einer Führungslinie durch mechanisches Einschneiden der Verbundfolie, beispielsweise mit einem Messer, ist aus den gleichen Gründen praktisch kaum durchführbar.

Ein Verfahren der eingangs genannten Art ist aus der EP-A-0 468 619 bekannt.

Der Erfindung liegt die Aufgabe zugrunde, ein Verfahren der eingangs genannten Art so weiter zu bilden, dass beim Aufreissen der Beutelverpackung eine definierte Öffnung entsteht.

Zur erfindungsgemässen Lösung der Aufgabe führt ein Verfahren mit den Merkmalen von Anspruch 1.

Mit dem vollständigen Durchtrennen der Folie ist die vorgegebene Tiefe der Perforationen garantiert. Da die Erzeugung der Perforationen vor der Herstellung der mehrschichtigen Verbundfolie erfolgt, ist ein Durchtrennen der Verpackungsfolie beim Schneidprozess von vornherein ausgeschlossen.

Grundsätzlich kann beim erfindungsgemässen Verfahren ebenfalls ein Laserstrahl als Schneidwerkzeug eingesetzt werden, jedoch kann jede andere geeignete Schneideinrichtung wie beispielsweise ein Rollschere oder auch ein Messer verwendet werden.

Die Folie wird über eine Kleberschicht mit den weiteren Schichten zur Verbundfolie zusammengefügt.

Die Perforationen können vor oder nach einer Beschichtung der Folie mit Klebstoff geschnitten werden.

Zwei linienförmige Perforationen werden im wesentlichen parallel und in Abstand zueinander als beidseitige Führungshilfen für einen beim Aufreissen der Beutelverpackung in der Verpackungsfolie fortschreitenden Riss geschnitten.

Bei einer aus der Verpackungsfolie hergestellten Beutelverpackung wird die Aufreisskerbe so gelegt, dass der in der Verpackungsfolie fortschreitende Riss zwischen den zwei Perforationslinien verläuft.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen Querschnitt durch eine Verpackungsfolie;
- Fig. 2 die Draufsicht auf eine aus der Verpackungsfolie von Fig. 1 hergestellte Beutelverpackung.

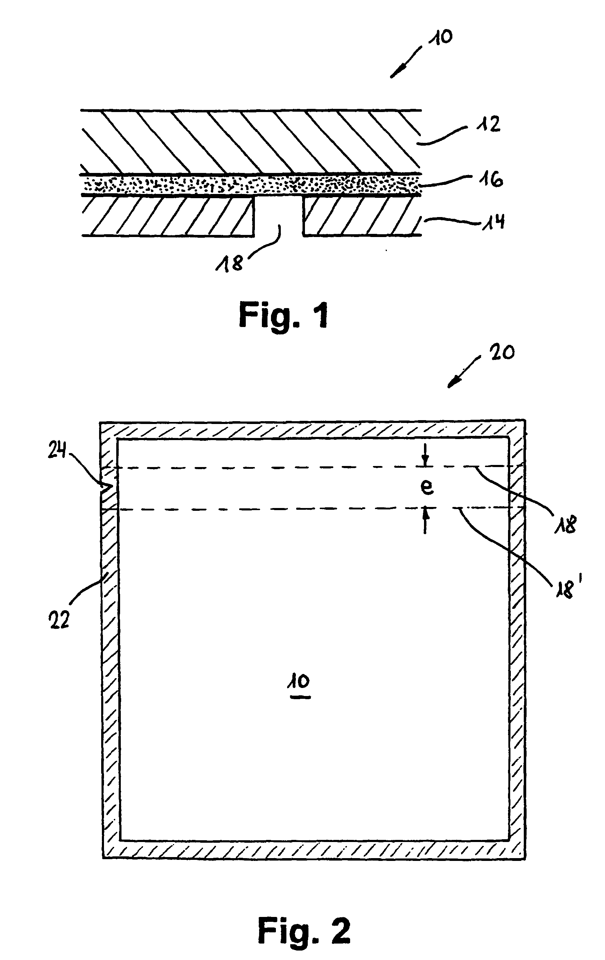

Eine in Fig. 1 dargestellte Verpackungsfolie 10 weist eine äussere Schicht 12 aus Polyethylenterephthalat (PET) und eine bei der späteren Verpackung gegen das Füllgut gerichtete innere Schicht 14 aus Polyethylen (PE) auf. Die innere Schicht 14 ist mit der äusseren Schicht 12 über eine Kleberschicht 16 auf der Basis von Polyurethan (PU) verbunden.

Die Herstellung der in Fig. 1 gezeigten Verpackungsfolie erfolgt so, dass zunächst die innere Schicht 14 als Folienbahn vorgelegt und mittels einer Schneidvorrichtung die linienförmigen Perforationen 18 geschnitten werden. Die derart vorgeschnittene innere Schicht 14 wird anschliessend mit der äusseren Schicht 12 zur Verpackungsfolie 10 zusammengefügt. Hierbei kann die Kleberschicht 16 ggf. schon vor dem Schneidvorgang auf die innere Schicht 18 aufgetragen werden.

Ein in Fig. 2 dargestellter Verpackungsbeutel 20 besteht im wesentlichen aus zwei einander aufliegenden Verpackungsfolien 10, die über eine randständige umlaufende Siegelnaht 22 miteinander verbunden sind. In dem zur Beutelöffnung vorgesehenen Bereich verlaufen zwei Perforationslinien 18, 18' etwa parallel zueinander in einem gegenseitigen Abstand e von beispielsweise 3 mm. Zwischen den beiden linienförmigen Perforationen 18, 18' ist in der Siegelnaht 22 am Beutelrand eine Anreisskerbe 24 angebracht. Der beim Aufreissen der Verpackung entstehende Riss setzt sich in der Verpackungsfolie 10 zwischen den beiden linienförmigen Perforationen 18, 18' fort und führt so zu einer definierten Öffnung des Verpackungsbeutels 20.

## Patentansprüche

1. Verfahren zur Herstellung einer leicht zu öffnenden Beutelverpackung (20) mit einer mehrschichtigen Verpackungsfolie (10) mit zwei im wesentlichen parallel und in Abstand (e) zueinander angeordneten linienförmigen Perforationen (18,18') als Führungshilfe für einen beim Aufreissen der Beutelverpackung (20) in der Verpackungsfolie (10) fortschreitenden Riss, wobei die Perforationen (18,18') in eine Folie (14) geschnitten werden, die derart vorgeschnittene Folie (14) mit einer weiteren Folie (12) zur Verpackungsfolie (10) zusammengefügt und an der Beutelverpackung (20) im Bereich der Perforationen (18,18') eine Aufreisskerbe (24) angeordnet wird,
**dadurch gekennzeichnet, dass**
die Verpackungsfolie (10) aus einer die Aussenseite der Beutelverpackung (20) bildenden äusseren Folie (12) aus Polyethylenterephtalat (PET) und aus einer die Innenseite der Beutelverpackung (20) bildenden inneren Folie (12) aus Polyethylen (PE) besteht, wobei die innere Folie (14) mit einer Kleberschicht (16) auf der Basis von Polyurethan (PU) beschichtet und mit der äusseren Folie (12) verklebt wird, die linienförmigen Perforationen (18,18') in die die Innenseite der Beutelverpackung (20) bildende innere Folie (14) geschnitten werden und die Aufreisskerbe (24) zwischen den beiden Perforationslinien (18,18') angeordnet wird.

2. Verfahren nach Anspruch 1 **dadurch gekennzeichnet, dass** die Perforationen (18,18') vor einer Beschichtung der inneren Folie (14) mit Klebstoff (16) geschnitten werden.

3. Verfahren nach Anspruch 1 **dadurch gekennzeichnet, dass** die Perforationen (18.18') nach einer Beschichtung der inneren Folie (14) mit Klebstoff (16) geschnitten werden.

## Claims

1. Method of producing an easy opening bag-type package (20) comprising a multi-layer packaging film (10) having two lines of perforations (18, 18') arranged substantially in parallel and at a distance (e) from one another and serving as a guide for a tear developing in the packaging film (10) when the bag-type package (20) is torn open, the perforations (18, 18') being cut into a film (14), the film (14) pre-cut in this manner being joined to another film (12) in order to form the packaging film (10) and a tear notch (24) being arranged on the bag-type package (20) in the region of the perforations (18, 18'), **characterised in that** the packaging film (10) consists of an outer film (12) of polyethylene terephthalate (PET) forming the outside of the bag-type package (20) and an inner film (12) of polyethylene (PE) forming the inside of the bag-type package (20), the inner film (14) being coated with an adhesive layer (16) based on polyurethane (PU) and being bonded to the outer film (12), the lines of perforations (18, 18') being cut into the inner film (14) forming the inside of the bag-type package (20) and the tear notch (24) being arranged between the two lines of perforations (18, 18').

2. Method according to claim 1, **characterised in that** the perforations (18, 18') are cut before the inner film (14) has been coated with adhesive (16).

3. Method according to claim 1, **characterised in that** the perforations (18, 18') are cut after the inner film (14) has been coated with adhesive (16).

## Revendications

1. Procédé de préparation d'un emballage en sachet (20) facile à ouvrir, avec une feuille d'emballage (10) multicouche, avec deux perforations en ligne (18, 18') disposées essentiellement parallèlement et à une certaine distance (e) l'une de l'autre, comme aide directrice pour une fissure avançant dans la feuille d'emballage (10) lors d'un arrachage de l'emballage en sachet (20), où les perforations (18, 18') sont découpées dans une feuille (14)la feuille (14) ainsi prédécoupée est assemblée avec une autre feuille (12) en une feuille d'emballage (10) et on dispose sur l'emballage en sachet (20), dans la zone des perforations (18, 18'), une entaille d'arrachage (24),
**caractérisé en ce que**
la feuille d'emballage (10) consiste en une feuille extérieure (12) en poly(téréphtalate d'éthylène) (PET) formant la face externe de l'emballage en sachet (20) et une feuille interne (14), formant la face interne de l'emballage en sachet (20), en polyéthylène (PE), où la couche interne (14) est revêtue d'une couche de colle (16) à base de polyuréthanne (PU) et collée à la couche extérieure (12), les perforations en ligne (18, 18') sont découpées dans la feuille interne (14) formant la face interne de l'emballage en sachet (20), et l'entaille d'arrachage (24) est disposée entre les deux perforations en ligne (18, 18').

2. Procédé selon la revendication 1, **caractérisé en ce que** les perforations (18, 18') sont découpées avant le revêtement de la feuille interne (14) avec la colle (16).

3. Procédé selon la revendication 1, **caractérisé en ce que** les perforations (18, 18') sont découpées après le revêtement de la feuille interne (14) avec la colle (16).
